# EUROPEAN PATENT APPLICATION

(11) **EP 4 683 365 A1**
(43) Date of publication of application: **21.01.2026**
(21) Application number: 24792040.8
(22) Date of filing: 17.04.2024
(51) Int. Cl.: H04W 12/03

(54) **METHODS FOR TRANSMITTING AND RECEIVING PHYSICAL PROTOCOL DATA UNIT, AND COMMUNICATION APPARATUS**

(30) Priority: 21.04.2023 CN 202310469546
(71) Applicant: Huawei Technologies Co., Ltd., Shenzhen, Guangdong 518129 (CN)
(72) Inventor: YU, Jian, Shenzhen, Guangdong 518129 (CN); GUO, Yuchen, Shenzhen, Guangdong 518129 (CN); HUANG, Guogang, Shenzhen, Guangdong 518129 (CN); MONTEMURRO, Michael, Shenzhen, Guangdong 518129 (CN); GAN, Ming, Shenzhen, Guangdong 518129 (CN)
(74) Representative: MERH-IP Matias Erny Reichl Hoffmann Patentanwälte PartG mbB
(86) International application number: PCT/CN2024/088306
(87) International publication number: WO 2024/217455

(57) **Abstract**

This application provides a communication method and a communication apparatus. This application may be applied to a wireless local area network system that supports 802.11 series protocols, for example, a next-generation Wi-Fi protocol of IEEE 802.11ax like 802.11be, Wi-Fi 7, or EHT, and a next generation of 802.11be like Wi-Fi 8 or UHR. In the method, a first user information field in a control frame carries control frame protection information. An association identifier in the first user information field indicates that the first user information field carries the control frame protection information. The method specifies a control frame protection mechanism, and can effectively prevent attacks on control frames.

## Description

This application claims priority to Chinese Patent Application No. 202310469546.0, filed with the China National Intellectual Property Administration on April 21, 2023 and entitled "PHYSICAL LAYER PROTOCOL DATA UNIT SENDING AND RECEIVING METHOD AND COMMUNICATION APPARATUS", which is incorporated herein by reference in its entirety.

### TECHNICAL FIELD

This application relates to the communication field, and more specifically, to a physical layer protocol data unit sending and receiving method and a communication apparatus.

### BACKGROUND

In recent years, control frames become increasingly important in data communication. For example, a control frame may be used for scheduling uplink data transmission. As a result, there are increasing types of attacks on control frames. For example, an attacker pretends to be an access point (access point, AP) and sends a basic trigger (Basic Trigger) frame, causing a station (station, STA) to send data and reports during a long time, occupying an air interface, and consuming power. Therefore, using the control frame to carry information for protecting the control frame can prevent an attack on a control frame. However, how to carry the corresponding protection information to protect the control frame is not determined yet.

### SUMMARY

Embodiments of this application provide a physical layer protocol data unit sending and receiving method and a communication apparatus, to specify a control frame protection mechanism, and can effectively prevent attacks on control frames.

According to a first aspect, a physical layer protocol data unit sending method is provided. The method may be performed by a first device, or may be performed by a chip or a circuit disposed in a first device. This is not limited in this application.

The method may include: generating a physical layer protocol data unit PPDU, where the PPDU includes a control frame, the control frame includes N first user information fields, an association identifier in the first user information field indicates that the first user information field carries first information, the first information includes information for protecting the control frame, and N is an integer greater than or equal to 1; and sending the PPDU.

In the technical solution, the first user information field in the control frame carries the control frame protection information, to prevent the control frame from being attacked. According to this control frame protection mechanism, a receiver device that supports control frame protection may determine, based on the association identifier in the first user information field, that the first user information field carries the control frame protection information, and a receiver device that does not support control frame protection considers the first user information field as a user information field that is not sent to the receiver device but sent to another device. Therefore, receiving of the control frame by the device that does not support control frame protection is not affected.

According to a second aspect, a physical layer protocol data unit receiving method is provided. The method may be performed by a second device, or may be performed by a chip or a circuit configured in a second device. This is not limited in this application.

The method may include: receiving a physical layer protocol data unit PPDU, where the PPDU includes a control frame, the control frame includes N first user information fields, an association identifier in the first user information field indicates that the first user information field carries first information, the first information includes information for protecting the control frame, and N is an integer greater than or equal to 1; and parsing the PPDU.

For beneficial effect of the second aspect, refer to the descriptions in the first aspect. Details are not described herein again.

In some implementations of the first aspect or the second aspect, the first information includes at least one of a key identifier, a packet number PN, and message integrity code MIC.

In some implementations of the second aspect, the control frame carries the MIC, and the method further includes: determining local MIC; and when it is determined that the local MIC matches the MIC carried in the control frame, considering that the control frame is not forged.

In some implementations of the second aspect, the control frame carries the PN, and the method further includes: when it is determined that the PN carried in the control frame is greater than a previously received PN, considering that no replay attack occurs in the control frame.

In some implementations of the first aspect or the second aspect, any one of N association identifiers in the N first user information fields is a predefined value.

In some implementations of the first aspect or the second aspect, a common field in the control frame carries second information, and the second information indicates that the control frame carries the first information.

In some implementations of the first aspect or the second aspect, a common field in the control frame carries third information, and the third information indicates a location of at least one first user information field in the N first user information fields.

In some implementations of the first aspect or the second aspect, at least one of a common field or a frame check sequence FCS field in the control frame carries fourth information, and the fourth information includes information for protecting the control frame.

In the technical solution, the FCS field carries the control frame protection information, to reduce overheads of carrying the protection information in the control frame. In addition, a control frame transmission error caused by poor channel quality and a MIC error caused by forgery are also considered.

In some implementations of the first aspect or the second aspect, the frame check sequence FCS field in the control frame carries a first exclusive OR result at a first location, the first exclusive OR result is an exclusive OR result of corresponding cyclic redundancy code CRC at the first location of the FCS field and fifth information, the fifth information includes information for protecting the control frame, and a number of bits of a bit value corresponding to the CRC at the first location of the FCS field is the same as a number of bits of a bit value corresponding to the fifth information.

In the technical solution, the FCS field carries the control frame protection information, to reduce overheads of carrying the protection information in the control frame. In addition, a control frame transmission error caused by poor channel quality and a MIC error caused by forgery are also considered.

In some implementations of the first aspect or the second aspect, duration from an end of a last first user information field in the N first user information fields to an end of the control frame is greater than or equal to a minimum trigger frame processing time of a first-type device, and the first-type device is a device capable of interpreting the association identifier in the first user information field.

According to a third aspect, a physical layer protocol data unit sending method is provided. The method may be performed by a first device, or may be performed by a chip or a circuit disposed in a first device. This is not limited in this application.

The method may include: generating a physical layer protocol data unit PPDU, where the PPDU includes a control wrapper frame, the control wrapper frame includes first information and a control frame, and the first information includes information for protecting the control frame; and sending the PPDU.

In the technical solution, the existing or newly defined control wrapper (Wrapper) frame is used to carry the control frame protection information, to prevent the control frame from being attacked. This control frame protection mechanism is applicable to any control frame. Because the protection mechanism does not need to modify or redefine the control frame, the protection mechanism is particularly applicable to a control frame of a fixed frame structure.

According to a fourth aspect, a physical layer protocol data unit receiving method is provided. The method may be performed by a second device, or may be performed by a chip or a circuit configured in a second device. This is not limited in this application.

The method may include: receiving a physical layer protocol data unit PPDU, where the PPDU includes a control wrapper frame, the control wrapper frame includes first information and a control frame, and the first information includes information for protecting the control frame; and parsing the PPDU.

For beneficial effect of the fourth aspect, refer to the descriptions of the third aspect. Details are not described herein again.

In an implementation of the third aspect or the fourth aspect, the first information includes at least one of a key identifier, a packet number PN, and message integrity code MIC.

In some implementations of the third aspect, the control wrapper frame carries the MIC, and the method further includes: determining local MIC; and when it is determined that the local MIC matches the MIC carried in the control frame, considering that the control frame is not forged.

In some implementations of the third aspect, the control wrapper frame carries the PN, and the method further includes: when it is determined that the PN carried in the control frame is greater than a previously received PN, considering that no replay attack occurs in the control frame.

In an implementation of the third aspect or the fourth aspect, the first information is carried in a high throughput control field.

In an implementation of the third aspect or the fourth aspect, the first information is carried in a control frame protection information field.

In an implementation of the third aspect or the fourth aspect, the control wrapper frame is a trigger frame, a trigger type field in a common information field of the trigger frame carries a first value, the first value indicates that the control wrapper frame includes a control frame protection information field and a carried frame field, the first value is any value in 8 to 15, and the control frame is carried in the carried frame field.

According to a fifth aspect, a physical layer protocol data unit sending method is provided. The method may be performed by a first device, or may be performed by a chip or a circuit disposed in a first device. This is not limited in this application.

The method may include: generating a physical layer protocol data unit PPDU, where the PPDU includes an aggregated medium access control protocol data unit A-MPDU, the A-MPDU includes a first medium access control protocol data unit MPDU and a second MPDU, the first MPDU carries a control frame, the second MPDU carries first information, and the first information includes information for protecting the control frame; and sending the PPDU.

In the technical solution, an A-MPDU in which a plurality of MPDUs are aggregated is used, one MPDU (frame) of the A-MPDU carries the control frame, and another MPDU of the A-MPDU carries the first information. In other words, the control frame is protected across frames by using the A-MPDU. This control frame protection mechanism is applicable to any control frame. Because this protection mechanism does not need to modify or redefine the control frame, the protection mechanism is particularly applicable to a control frame whose frame format cannot be changed.

According to a sixth aspect, a physical layer protocol data unit receiving method is provided. The method may be performed by a second device, or may be performed by a chip or a circuit configured in a second device. This is not limited in this application.

The method may include: receiving a physical layer protocol data unit PPDU, where the PPDU includes an aggregated medium access control protocol data unit A-MPDU, the A-MPDU includes a first medium access control protocol data unit MPDU and a second MPDU, the first MPDU carries a control frame, the second MPDU carries first information, and the first information includes information for protecting the control frame; and parsing the PPDU.

For beneficial effect of the sixth aspect, refer to descriptions of the fifth aspect. Details are not described herein again.

In an implementation of the fifth aspect or the sixth aspect, the first information includes at least one of a key identifier, a packet number PN, and message integrity code MIC.

In some implementations of the sixth aspect, the second MPDU carries the MIC, and the method further includes: determining local MIC; and when it is determined that the local MIC matches the MIC carried in the control frame, considering that the control frame is not forged.

In some implementations of the sixth aspect, the second MPDU carries the PN, and the method further includes: when it is determined that the PN carried in the control frame is greater than a previously received PN, considering that no replay attack occurs in the control frame.

According to a seventh aspect, a communication apparatus is provided. The communication apparatus includes: a processing unit, configured to generate a physical layer protocol data unit PPDU, where the PPDU includes a control frame, the control frame includes N first user information fields, an association identifier in the first user information field indicates that the first user information field carries first information, the first information includes information for protecting the control frame, and N is an integer greater than or equal to 1; and a communication unit, configured to send the PPDU.

According to an eighth aspect, a communication apparatus is provided. The communication apparatus includes: a communication unit, configured to receive a physical layer protocol data unit PPDU, where the PPDU includes a control frame, the control frame includes N first user information fields, an association identifier in the first user information field indicates that the first user information field carries first information, the first information includes information for protecting the control frame, and N is an integer greater than or equal to 1; and a processing unit, configured to parse the PPDU.

In some implementations of the seventh aspect or the eighth aspect, the first information includes at least one of a key identifier, a packet number PN, and message integrity code MIC.

In some implementations of the eighth aspect, the control frame carries the MIC, and the processing unit is further configured to determine local MIC. The processing unit is further configured to determine that the local MIC matches the MIC carried in the control frame. The processing unit is further configured to determine that the control frame is not forged.

In some implementations of the eighth aspect, the control frame carries the PN, and the processing unit is further configured to determine that the PN carried in the control frame is greater than a previously received PN. The processing unit is further configured to determine that no replay attack occurs in the control frame.

In some implementations of the seventh aspect or the eighth aspect, any one of N association identifiers in the N first user information fields is a predefined value.

In some implementations of the seventh aspect or the eighth aspect, a common field in the control frame carries second information, and the second information indicates that the control frame carries the first information.

In some implementations of the seventh aspect or the eighth aspect, a common field in the control frame carries third information, and the third information indicates a location of at least one first user information field in the N first user information fields.

In some implementations of the seventh aspect or the eighth aspect, at least one of a common field or a frame check sequence FCS field in the control frame carries fourth information, and the fourth information includes information for protecting the control frame.

In some implementations of the seventh aspect or the eighth aspect, the frame check sequence FCS field in the control frame carries a first exclusive OR result at a first location, the first exclusive OR result is an exclusive OR result of corresponding cyclic redundancy code CRC at the first location of the FCS field and fifth information, the fifth information includes information for protecting the control frame, and a number of bits of a bit value corresponding to the CRC at the first location of the FCS field is the same as a number of bits of a bit value corresponding to the fifth information.

In some implementations of the seventh aspect or the eighth aspect, duration from an end of a last first user information field in the N first user information fields to an end of the control frame is greater than or equal to a minimum trigger frame processing time of a first-type device, and the first-type device is a device capable of interpreting the association identifier in the first user information field.

According to a ninth aspect, a communication apparatus is provided. The communication apparatus includes: a processing unit, configured to generate a physical layer protocol data unit PPDU, where the PPDU includes a control wrapper frame, the control wrapper frame includes first information and a control frame, and the first information includes information for protecting the control frame; and a communication unit, configured to send the PPDU.

According to a tenth aspect, a communication apparatus is provided. The communication apparatus includes: a communication unit, configured to receive a physical layer protocol data unit PPDU, where the PPDU includes a control wrapper frame, the control wrapper frame includes first information and a control frame, and the first information includes information for protecting the control frame; and a processing unit, configured to parse the PPDU.

In an implementation of the ninth aspect or the tenth aspect, the first information includes at least one of a key identifier, a packet number PN, and message integrity code MIC.

In some implementations of the ninth aspect, the control wrapper frame carries the MIC, and the processing unit is further configured to determine local MIC. The processing unit is further configured to determine that the local MIC matches the MIC carried in the control frame. The processing unit is further configured to determine that the control frame is not forged.

In some implementations of the ninth aspect, the control wrapper frame carries the PN, and the processing unit is further configured to determine that the PN carried in the control frame is greater than a previously received PN. The processing unit is further configured to determine that no replay attack occurs in the control frame.

In an implementation of the ninth aspect or the tenth aspect, the first information is carried in a high throughput control field.

In an implementation of the ninth aspect or the tenth aspect, the first information is carried in a control frame protection information field.

In an implementation of the ninth aspect or the tenth aspect, the control wrapper frame is a trigger frame, a trigger type field in a common information field of the trigger frame carries a first value, the first value indicates that the control wrapper frame includes a control frame protection information field and a carried frame field, the first value is any value in 8 to 15, and the control frame is carried in the carried frame field.

According to an eleventh aspect, a communication apparatus is provided. The communication apparatus includes: a processing unit, configured to generate a physical layer protocol data unit PPDU, where the PPDU includes an aggregated medium access control protocol data unit A-MPDU, the A-MPDU includes a first medium access control protocol data unit MPDU and a second MPDU, the first MPDU carries a control frame, the second MPDU carries first information, and the first information includes information for protecting the control frame; and a communication unit, configured to send the PPDU.

According to a twelfth aspect, a communication apparatus is provided. The communication apparatus includes: a communication unit, configured to receive a physical layer protocol data unit PPDU, where the PPDU includes an aggregated medium access control protocol data unit A-MPDU, the A-MPDU includes a first medium access control protocol data unit MPDU and a second MPDU, the first MPDU carries a control frame, the second MPDU carries first information, and the first information includes information for protecting the control frame; and a processing unit, configured to parse the PPDU.

In an implementation of the eleventh aspect or the twelfth aspect, the first information includes at least one of a key identifier, a packet number PN, and message integrity code MIC.

In some implementations of the twelfth aspect, the second MPDU carries the MIC, and the processing unit is further configured to determine local MIC. The processing unit is further configured to determine that the local MIC matches the MIC carried in the control frame. The processing unit is further configured to determine that the control frame is not forged.

In some implementations of the twelfth aspect, the second MPDU carries the PN, and the processing unit is further configured to determine that the PN carried in the control frame is greater than a previously received PN. The processing unit is further configured to determine that no replay attack occurs in the control frame.

According to a thirteenth aspect, a communication apparatus is provided, and includes a processor. The processor is coupled to a memory, and may be configured to execute instructions in the memory, to implement the method according to any one of the first aspect, the third aspect, or the fifth aspect and any possible implementation of the first aspect, the third aspect, or the fifth aspect. Optionally, the apparatus further includes the memory. Optionally, the apparatus further includes a communication interface, and the processor is coupled to the communication interface.

In an implementation, the apparatus is a first device. When the apparatus is the first device, the communication interface may be a transceiver or an input/output interface.

In another implementation, the apparatus is a chip disposed in a first device. When the apparatus is the chip disposed in the first device, the communication interface may be an input/output interface.

According to a fourteenth aspect, a communication apparatus is provided, and includes a processor. The processor is coupled to a memory, and may be configured to execute instructions in the memory, to implement the method according to any one of the second aspect, the fourth aspect, or the sixth aspect and any possible implementation of the second aspect, the fourth aspect, or the sixth aspect. Optionally, the apparatus further includes the memory. Optionally, the apparatus further includes a communication interface, and the processor is coupled to the communication interface.

In an implementation, the apparatus is a second device. When the apparatus is the second device, the communication interface may be a transceiver or an input/output interface.

In another implementation, the apparatus is a chip disposed in a second device. When the apparatus is the chip disposed in the second device, the communication interface may be an input/output interface.

According to a fifteenth aspect, a computer-readable storage medium is provided. The computer-readable storage medium stores computer instructions. When the computer instructions are executed by an apparatus, the apparatus is enabled to implement the method in any one of the first aspect to the sixth aspect and any possible implementation of the first aspect to the sixth aspect.

According to a sixteenth aspect, a computer program product including instructions is provided. The computer program product includes a computer program. When the computer program is executed by an apparatus, the apparatus is enabled to implement the method provided in any one of the first aspect to the sixth aspect and any possible implementation of the first aspect to the sixth aspect.

According to a seventeenth aspect, a communication system is provided. The communication system includes the foregoing first device and second device. The first device is configured to perform the method according to any one of the first aspect, the third aspect, the fifth aspect, or any possible implementation of the first aspect, the third aspect, or the fifth aspect, and the second device is configured to perform the method according to any one of the second aspect, the fourth aspect, the sixth aspect, or any possible implementation of the second aspect, the fourth aspect, or the sixth aspect.

### BRIEF DESCRIPTION OF DRAWINGS

FIG. 1 is a diagram of a network architecture of a wireless local area network to which an embodiment of this application is applicable;
FIG. 2 is a diagram of a communication apparatus according to an embodiment of this application;
FIG. 3 is a diagram of a physical layer protocol data unit sending and receiving method according to an embodiment of this application;
FIG. 4 is a diagram in which an AP sends a trigger frame to trigger multiple user uplink transmission;
FIG. 5 is a diagram of a frame structure of an 802.11be trigger frame;
FIG. 6 is a diagram of a trigger frame protection mechanism according to this application;
FIG. 7 is a diagram of another trigger frame protection mechanism according to this application;
FIG. 8 is a diagram of an NDPA frame protection mechanism according to this application;
FIG. 9 is a diagram of another physical layer protocol data unit sending and receiving method according to an embodiment of this application;
FIG. 10 is a diagram of a frame structure of a control wrapper frame in an existing standard;
FIG. 11 is a diagram of a frame structure of a new control wrapper frame according to this application;
FIG. 12 is a diagram of a frame structure of a trigger-based control wrapper frame according to this application;
FIG. 13 is a diagram of still another physical layer protocol data unit sending and receiving method according to an embodiment of this application;
FIG. 14 is a diagram of a possible case in which an A-MPDU carries first information according to this application;
FIG. 15 is a block diagram of a communication apparatus 200 according to an embodiment of this application; and
FIG. 16 is a block diagram of a communication apparatus 300 according to an embodiment of this application.

### DESCRIPTION OF EMBODIMENTS

The following describes technical solutions of embodiments in this application with reference to accompanying drawings. Clearly, the described embodiments are a part but not all of embodiments of this application. All other embodiments obtained by a person of ordinary skill in the art based on embodiments of this application without creative efforts shall fall within the protection scope of this application.

In embodiments of this application, the term such as "example" or "for example" represents giving an example, an illustration, or a description. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

It should be noted that the "field" in this application may be a part of information in general, and the "field" may also be referred to as a "field", a "field", or the like. In addition, a name of the field in this application is merely an example, and may be another name in specific implementation. This is not specifically limited in this application.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments by using any appropriate manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

The technical solutions provided in embodiments of this application are applicable to a wireless local area network (wireless local area network, WLAN) scenario. For example, IEEE 802.11-related standards such as the 802.11a/b/g standard, the 802.11n standard, the 802.11ac standard, the 802.11ax standard, and a next-generation Wi-Fi protocol of IEEE 802.11ax like 802.11be, Wi-Fi 7, 802.11ad, 802.11ay, 802.11bf, or a next generation of 802.11be or Wi-Fi 8 are supported. The technical solutions provided in embodiments of this application may be applied to an ultra-wideband (ultra-wideband, UWB)-based wireless personal area network system, for example, the 802.15 series standards, or may be applied to a sensing (sensing) system, for example, the 802.11bf series standards. The 802.11n standard is referred to as high throughput (high throughput, HT), the 802.11ac standard is referred to as very high throughput (very high throughput, VHT), the 802.11ax standard is referred to as high efficiency (high efficiency, HE), and the 802.11be standard is referred to as extremely high throughput (extremely high throughput, EHT). Standards before HT, such as 802.11a/b/g, are collectively referred to as non-HT (non-high throughput). At present, next-generation standards after IEEE 802.11be have also been researched, and are called ultra-high reliability (ultra-high reliability, UHR).

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network. For example, embodiments of this application are further applicable to a wireless local area network system, such as an Internet of things (internet of things, IoT) network or a vehicle-to-everything (vehicle to X, V2X) network. Certainly, embodiments of this application are further applicable to other possible communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) communication system, and a future 6th generation (6th generation, 6G) communication system.

The communication systems applicable to this application are merely examples for description, and the communication systems applicable to this application are not limited thereto. This is described herein once for all, and details are not described below again.

The WLAN may include a plurality of basic service sets (basic service sets, BSSs). Network nodes in the BSS are a station (station, STA) and an access point (access point, AP). Each BSS may include one AP and a plurality of STAs associated with the AP.

The AP in embodiments of this application may also be referred to as a wireless access point, a hotspot, or the like. The AP is an access point for a mobile user to access a wired network, and is mainly deployed in a home, inside a building, and inside a campus, with a typical coverage radius of tens of meters to hundreds of meters. Certainly, the AP may alternatively be deployed outdoors. The AP is equivalent to a bridge that connects a wired network and a wireless network. A main function of the AP is to connect wireless network clients together, and then connect the wireless network to the Ethernet. For example, the AP may be a device that supports the 802.11ax protocol and a device that supports a next-generation Wi-Fi protocol of 802.11ax. Further, the AP may be a device that supports one or more WLAN standards such as 802.11 series protocols or subsequent versions like a next generation of 802.11be, for example, Wi-Fi 8 and UHR.

The STA in embodiments of this application may be a wireless communication chip, a wireless sensor, or a wireless communication terminal, for example, may be a mobile phone that supports a Wi-Fi communication function, a tablet computer that supports a Wi-Fi communication function, a set top box that supports a Wi-Fi communication function, a smart television that supports a Wi-Fi communication function, a smart wearable device that supports a Wi-Fi communication function, a vehicle-mounted communication device that supports a Wi-Fi communication function, or a computer that supports a Wi-Fi communication function. For example, the STA may be a device that supports the 802.11ax standard and a device that supports a next-generation Wi-Fi protocol of 802.11ax. Further, the STA may be a device that supports one or more WLAN standards such as 802.11 series protocols or subsequent versions like a next generation of 802.11be, for example, Wi-Fi 8 and UHR.

In embodiments of this application, in an example structure, the STA or the AP includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. A specific structure of an execution entity of the method provided in embodiments of this application is not uniquely limited in the foregoing examples, provided that a program that records code of the method provided in embodiments of this application can be run to perform communication according to the method provided in embodiments of this application. For example, the method provided in embodiments of this application may be performed by a STA, an AP, or a functional module that is in a STA or an AP and that can invoke and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk, or a magnetic tape), an optical disc (for example, a compact disc (compact disc, CD), a digital versatile disc (digital versatile disc, DVD)), a smart card, and a flash memory component (for example, erasable programmable read-only memory (erasable programmable read-only memory, EPROM), a card, a stick, or a key drive). In addition, various storage media described in this specification may represent one or more devices and/or other machine-readable media that are configured to store information. The term "machine readable media" may include but is not limited to a radio channel, and various other media that can store, contain and/or carry instructions and/or data.

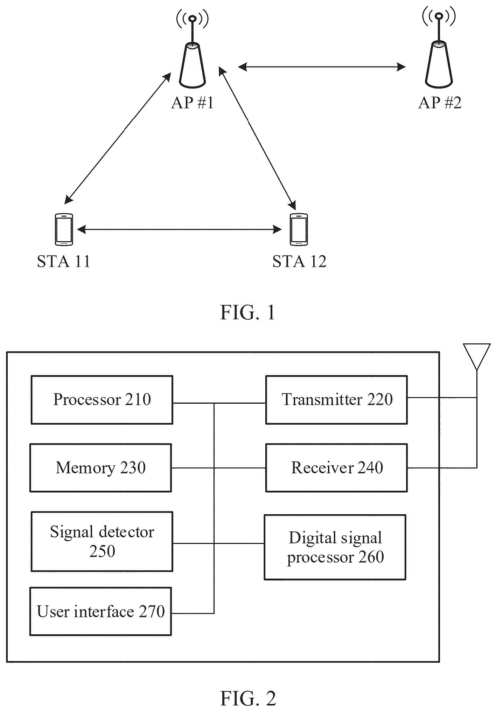

FIG. 1 is a diagram of a network architecture of a wireless local area network to which an embodiment of this application is applicable. As shown in FIG. 1, one AP may be associated with one or more STAs, that is, one AP may communicate with one or more STAs. As shown in FIG. 1, the network architecture of the wireless local area network may further include a plurality of APs, and different APs may also communicate with each other. For example, as shown in FIG. 1, the figure shows an AP #1, an AP #2, and a STA 11 and a STA 12 associated with the AP #1. Data transmission may be performed between the AP #1 and the STA 11 or the STA 12, data transmission may be performed between the STA 11 and the STA 12, and the AP #1 and the AP #2 may also communicate with each other.

It should be understood that FIG. 1 is merely an example, and the network architecture of the wireless local area network to which this application is applicable should not be limited. For example, the network architecture may further include more APs, and each AP may be associated with more STAs. This is not limited in embodiments of this application.

FIG. 2 is a diagram of a communication apparatus according to an embodiment of this application. The communication apparatus may include one or more of the following components: a processor 210, a transmitter 220, a memory 230, a receiver 240, a signal detector 250, a digital signal processor 260, and a user interface 270. It should be understood that the communication apparatus may include only a part of modules in the figure. For example, the communication apparatus includes the processor 210 and the memory 230. In some possible implementations, the communication apparatus may be an AP or a STA.

In today's society, information security is critical. In wireless local area network transmission, a STA and an AP usually need to be associated and authenticated (Authentication) before data transmission, and can transmit data only after obtaining a related key.

In wireless local area network transmission, a frame for communication mainly includes three types: data frames, management frames, and control frames. Data frames are used for carrying upper-layer data. Management frames are used for carrying some information for cell management. For example, a management frame includes a beacon frame, an association request frame, and the like. Control frames usually carry some short control signaling. For example, a management frame includes an acknowledgement frame, a trigger frame, and the like. Currently, there are more concerns about protection of data frames and management frames, because control frames usually carry some simple control signaling and do not attract enough attention. However, in recent years, control frames become increasingly important in data communication. For example, a control frame may be used for scheduling uplink data transmission. As a result, there are increasing types of attacks on control frames. For example, an attacker pretends to be an AP and sends a basic trigger (Basic Trigger) frame, causing a STA to send data and reports during a long time, occupying an air interface, and consuming power. For another example, the attacker pretends to be an AP, and sends a multiple user request to send (multiple user request to send, MU-RTS) trigger frame, to trigger the STA to reply with an acknowledgement frame and clear a buffer that should be stored. For another example, the attacker pretends to be an AP, and sends a multiple user block ACK request (multiple user block ack request, MU-BAR) trigger frame, to trigger the STA to wake up from a low power consumption mode to a high power consumption mode, and send a clear to send frame in response. Therefore, an attack on a control frame can be prevented by carrying information for protecting the control frame in the control frame. However, how to carry the corresponding protection information to protect the control frame is not clear yet.

In view of this, this application provides a physical layer protocol data unit sending and receiving method, to specify a control frame protection mechanism, and can effectively prevent attacks on control frames.

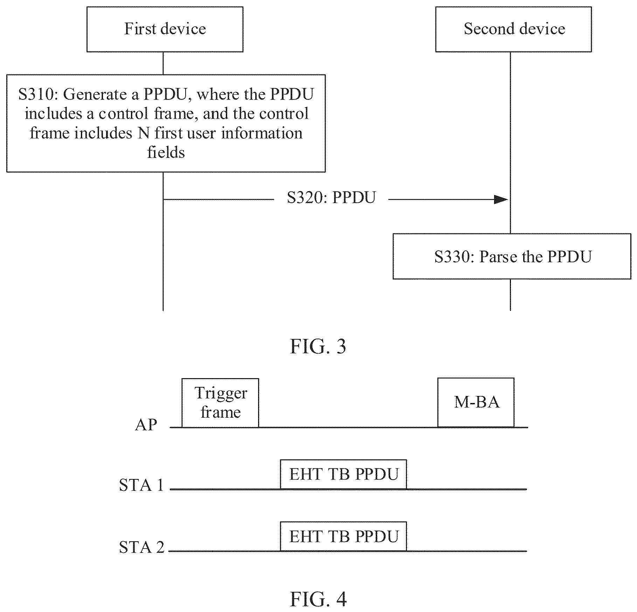

FIG. 3 is a diagram of a physical layer protocol data unit sending and receiving method according to an embodiment of this application. The method includes the following steps. For example, in the method, a first device is an AP, and a second device is a STA.

S310: The first device generates a physical layer protocol data unit (physical layer protocol data unit, PPDU).

The PPDU includes a control frame, the control frame includes N first user information fields, an association identifier in the first user information field indicates that the first user information field carries first information, the first information includes information for protecting the control frame, and N is an integer greater than or equal to 1.

It should be noted that the control frame in this embodiment of this application may further include one or more first user information fields other than the N first user information fields. This is not limited in this application.

For ease of description, in this embodiment of this application, all information carried in the control frame and for protecting the control frame is referred to as protection information #1. Protection information #1 provided in this embodiment of this application is not specifically limited. Any information that can be used to protect the control frame falls within the protection scope of the protection information #1 provided in this embodiment of this application. The first information includes information for protecting the control frame. It may be understood that the first information includes a part or all of information in the protection information #1.

For example, to prevent a forgery (forgery) attack and a replay (replay) attack, the protection information #1 may include at least one of a key identifier (Key ID), a packet number (packet number, PN), and message integrity code (message integrity code, MIC). In this embodiment of this application, a field carrying the key identifier may be referred to as a key identifier field, a field carrying the PN may be referred to as a PN field, and a field carrying the MIC may be referred to as an MIC field. The PN in the PN field is used to identify the protected control frame. The MIC field carries the MIC calculated based on the protected control frame. Information that needs to be encrypted and a key are required for MIC calculation. The information that needs to be encrypted is a part of a frame body of the protected control frame and additional authentication data (additional authentication data, AAD) including a frame control field and some address fields. A length of the MIC field depends on a key obtained by the first device and the second device in an authentication process. For example, in a specific algorithm, 128-bit information that needs to be encrypted in the control frame and a 128-bit key may be output as 128-bit information by using an encryption algorithm, and finally, 8 bytes (that is, 64 bits) of the output 128-bit information are used as the MIC. How to determine, based on the PN and the MIC, whether a forgery attack and a replay attack occur on the control frame is specifically described in S330. Details are not described herein.

The following uses an example in which the control frame is a trigger frame to specifically describe how to carry the first information in the first user information field of the trigger frame. Before how to carry the first information is described, a frame format of the trigger frame and a trigger-based transmission procedure are first described. Usually, the STA performs uplink data transmission after obtaining transmission permission through channel contention, for example, a channel is preempted in an enhanced distributed channel access (enhanced distributed channel access, EDCA) manner. A trigger-based scheduling uplink transmission method is introduced in the 802.11ax standard, and the trigger-based scheduling uplink transmission method is inherited in 802.11be. The following describes, with reference to FIG. 4, a solution in which an AP triggers uplink multiple user transmission in the 802.11be standard. The solution includes the following steps.

Step 1: An AP sends a trigger frame.

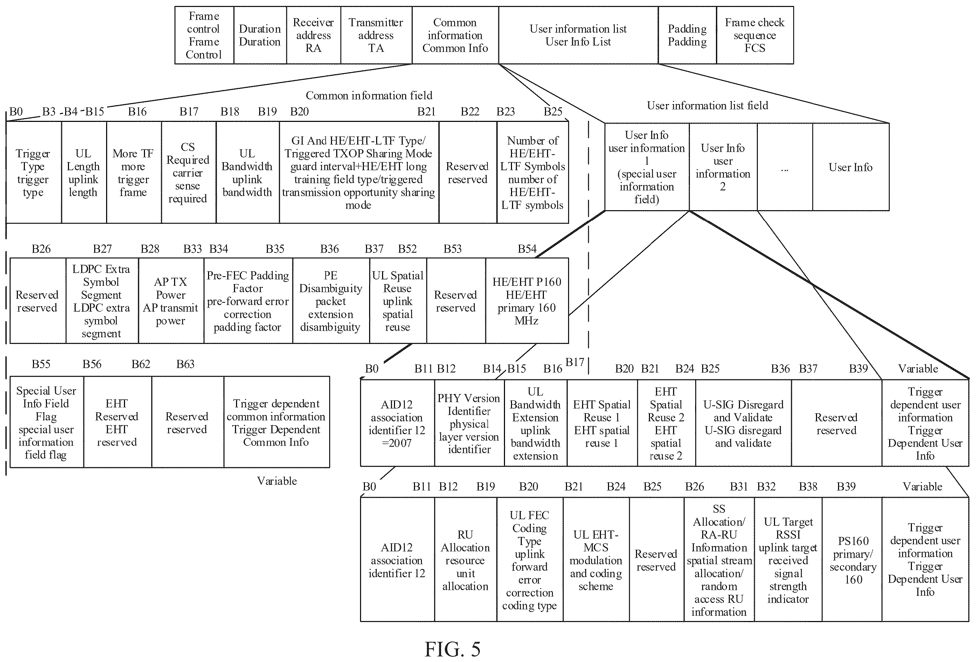

FIG. 5 is a diagram of a frame structure of an 802.11be trigger frame. The trigger frame includes a common information (Common Info) field and a user information list (User Info List) field. For meanings of fields included in the common information field, refer to descriptions in the protocol. Details are not described herein again. The user information list field includes a plurality of user information (User Info) fields. Each user information field includes an association identifier 12 (Association Identifier 12, AID12) field. A value of an AID12 field in a 1^{st} user information field is 2007. Some common information is carried after the AID12 field in the user information field. Although the 1^{st} user information field is a user information field, the 1^{st} user information field carries common information. Therefore, the 1^{st} user information field may be referred to as a special user information field. It should be noted that when the AID12 is associated with the STA, the AP does not allocate an AID12 of 2007 to any STA. Therefore, when a STA receives a trigger frame whose AID 12 value is 2007, there is no ambiguity. Starting from a 2^{nd} user information field, an AID12 field in the user information field specifically points to a STA user. The user information field includes information that needs to be read by the pointed-to STA user. A resource unit allocation (RU allocation) subfield in the user information field and a primary/secondary 160 field jointly indicate a position of a specific resource unit (resource unit, RU) or multiple resource unit (MRU) allocated to the STA user. In addition, in FIG. 5, numbers of bits occupied by fields included in the common information field and the user information list field are separately marked. Herein, merely an example is used for description. For example, the AID12 field in the user information 1 corresponds to B0 to B11, and indicates that the AID12 field is the first 12 bits in the user information 1 field.

Step 2: STAs (for example, a STA #1 and a STA #2) receive the trigger frame, and first read a common information field and a special user information field. Then, if the STAs obtain, from the trigger frame through parsing, user information fields that need to be read by the STAs, the STAs send, on RUs or MRUs indicated by resource unit allocation field in the user information field, respective extremely high throughput trigger-based physical layer protocol data unit (extremely high throughput trigger-based PPDU, EHT TB PPDU).

Step 3: After receiving the EHT TB PPDUs sent by one or more stations, the AP replies with a multi-station block acknowledgement (multi-STA block acknowledgement, M-BA) frame.

The following describes how to carry first information in the trigger frame. In the user information list field in the trigger frame, in addition to a special user information field whose value of an AID12 field is 2007, another type of user information field (that is, a first user information field) may be added. A value of an AID12 field in the first user information field is a predefined value, and the predefined value may indicate that the first user information field carries the first information.

For example, the predefined value may be one or more values in 2008 to 2044 or 2047 to 4094. It may be understood that, a value of the AID12 field in the first user information field does not conflict with a value of an AID12 corresponding to an existing STA user, and the first user information field is considered by another STA user as a user information field that is not sent to the another STA and that is of another STA user. Therefore, receiving of the trigger frame by STA users is not affected.

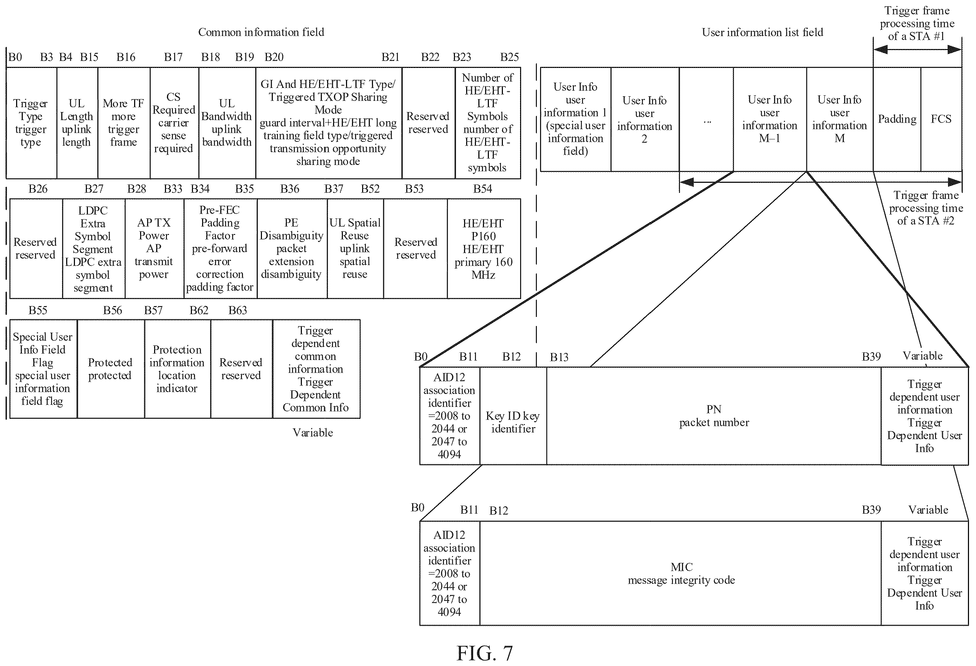

For example, the predefined value may also be one or more values in 1 to 2006. It can be understood that, because a sequence of user information fields is considered in the 802.11ax standard, the standard suggests that a user information field (that is, a user information field whose value of an AID12 field in the user information field is 1 to 2007) allocated to a user needs to be placed before the user information list field. Therefore, one or more values in 1 to 2006 may alternatively be used as the value of the AID12 field in the first user information field, and not allocated to a STA, so that STAs can obtain control frame protection information in a front part of a user information list, to obtain a longer trigger frame processing time. For details about the trigger frame processing time of the STAs, refer to the descriptions in FIG. 7. Details are not described herein.

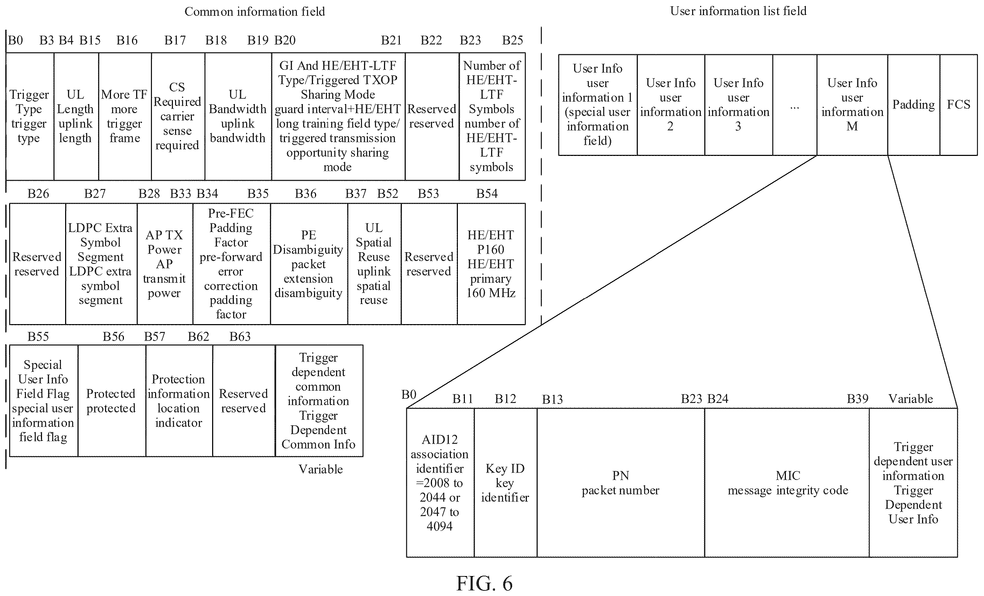

Optionally, the trigger frame includes one first user information field, and the first user information field carries the first information. As shown in FIG. 6, a trigger frame includes one first user information field (that is, a user information field M in the figure), and first information carried in the user information field M includes a key identifier, a PN, and MIC. Specifically, B12 (that is, a key identifier field) in the user information field M carries the key identifier, B13 to B23 (that is, a PN field) carry the PN, and B24 to B39 (that is, a MIC field) carry the MIC. It should be understood that FIG. 6 shows only an example of a sequence of carried information. A sequence of actually carried information is not limited in this application.

Optionally, the trigger frame includes a plurality of first user information fields, and the plurality of first user information fields respectively carry respective corresponding first information. As shown in FIG. 7, a trigger frame includes two first user information fields (that is, a user information field M-1 and a user information field #M in the figure). First information carried in the user information field M-1 includes a key identifier and a PN, and first information carried in the user information field M includes MIC. Specifically, in the user information field M-1, B12 (that is, a key identifier field) carries the key identifier, and B13 to B39 (that is, a PN field) carry the PN, and B12 to B39 (that is, a MIC field) in the user information field M carry the MIC. The trigger frame may further include three, four, or more first user information fields. Examples are not described one by one herein.

Optionally, values of AID12 fields of the plurality of first user information fields may be the same or may be different.

Optionally, locations of the plurality of first user information fields may be consecutive, or may be discrete, or may be partially consecutive and partially discrete.

Optionally, information in the protection information #1 may be carried in the first user information field of the control frame, or may be carried in a common field of the control frame. The common information field in this embodiment of this application may include a common information field and/or a user information field (namely, a special user information field) in which a value of an AID12 field is 2007. For example, a part of the protection information #1 may be carried in one or more bits of B22, B53, and B56 to B63 in the common information field. For example, a part of the protection information #1 may alternatively be carried in one or more bits of B25 to B39 in the user information field whose value of the AID12 field is 2007.

Optionally, the information in the protection information #1 may also be carried in a frame check sequence (frame check sequence, FCS) field of the control frame. It should be noted that, if not carrying the protection information #1, the FCS field carries cyclic redundancy code (cyclic redundancy code, CRC). The following provides two specific implementations.

In a possible implementation, the FCS field in the control frame carries fourth information at a first location, and the fourth information includes information for protecting the control frame (the fourth information is information included in the protection information #1). It may be understood that, in this implementation, CRC originally carried in the FCS field at the first location is replaced with the fourth information. For example, when the FCS field does not carry the protection information #1, originally carried CRC is 10110110010001001110001111100011. If the fourth information that needs to be carried in the FCS field is 110, any three bits in the FCS field may be replaced with 110. Herein, replacing the first three bits in the FCS field is used as an example. A replaced FCS field is 11010110010001001110001111100011.

In another possible implementation, the FCS field of the control frame carries a first exclusive OR result at a first location. The first exclusive OR result is an exclusive OR result of fifth information and CRC that is carried at the first location when the FCS field does not carry the protection information #1, the fifth information includes information for protecting the control frame (the fifth information is information included in the protection information #1), and a number of bits of a bit value corresponding to the CRC at the first location of the FCS field is the same as a number of bits of a bit value corresponding to the fifth information. For example, as described above, when the FCS field does not carry the protection information #1, the originally carried CRC is 10110110010001001110001111100011. If the fifth information that needs to be carried in the FCS field is 110, and the first location is the first three bits in the FCS field, the first exclusive OR result is an exclusive OR result 011 of 101 and 110, and the information carried in the FCS field changes from 10110110010001001110001111100011 to 01110110010001001110001111100011.

The solution of partially replacing the CRC in the FCS field or XORing the CRC in the FCS field can reduce overheads of carrying the protection information in the control frame. In addition, in this solution, a control frame transmission error caused by poor channel quality and a MIC error caused by forgery are also considered. The reason is as follows: Because either of the control frame transmission error and forged MIC may cause an error in the FCS field, the two errors can be both identified.

Optionally, the common field in the trigger frame carries second information, and the second information indicates that the trigger frame carries the first information. For example, the second information may be carried in one of the bits B22, B53, and B56 to B63 in the common information field. For example, a part of the protection information #1 may alternatively be carried in one bit of B25 to B39 in the user information field whose value of the AID12 field is 2007. As shown in FIG. 6 and FIG. 7, in a possible implementation, the second information is carried in B56 in the common information field. For example, a field corresponding to B56 may be referred to as a protected field. Carrying the second information in the common field of the trigger frame can help a STA that supports trigger frame protection make corresponding preparations in advance after reading the second information, to read the protection information (namely, the first information) carried in the first user information field.

In addition, to help the STA quickly locate a location of the first user information field, third information may be further carried in the common field. The third information indicates a location of at least one first user information field included in the trigger frame. For example, the third information may be carried in one or more bits of B22, B53, and B56 to B63 in the common information field. For example, a part of the protection information #1 may alternatively be carried in one or more bits of B25 to B39 in the user information field whose value of the AID12 field is 2007. For example, the third information indicates a location of a 1^{st} first user information field in the trigger frame, and all first user information fields in the trigger frame are consecutive. For example, the third information is carried in a 5-bit field, and a value of the third information is 00011, indicating that the 1^{st} first user information field in the trigger frame is a 3^{rd} user information field in the user information list field. For another example, there is a 5-bit field, for example, a 5-bit field 11111, indicating that 1^{st} to 32^{nd} user information fields in the user information list field carry information related to protecting the trigger frame. Further, if there may be a large number of first user information fields, an indication granularity may be increased. For example, there is also a 5-bit field, which may indicate that 2^{nd}, 4^{th}, 6^{th}, ..., 62^{nd}, and 64^{th} user information fields in the user information list carry the information related to protecting the trigger frame. As shown in FIG. 6 and FIG. 7, in a possible implementation, the third information is carried in B57 to B62 in the common information field. For example, a field corresponding to B57 to B62 may be referred to as a protection information location indicator field.

In addition, for a trigger frame carrying the first user information field, a STA that supports trigger frame protection and a STA that does not support trigger frame protection have different understanding of a trigger frame processing time. As shown in FIG. 7, for the STA #1 that does not support trigger frame protection, for example, user information #2 is a user information field that needs to be read by the STA #1. In a trigger frame parsing process, after finding the user information field of the STA #1, the STA #1 may stop receiving a subsequent user information list field. In this case, a trigger frame processing time understood by the STA #1 may be duration from an end of a user information field #2 to an end of the trigger frame. However, for the STA #2 that supports trigger frame protection, in addition to reading the user information field of the STA #2, the STA #2 may further need to read all first user information fields in the trigger frame to obtain the first information. The last user information field included in the trigger frame in FIG. 7 is the user information field #M. In this case, a trigger frame processing time understood by the STA #2 is duration from an end of the user information field #M to an end of the trigger frame. Therefore, when generating the trigger frame, the AP needs to appropriately set the trigger frame processing time of the STA that supports trigger frame protection and the trigger frame processing time of the STA that does not support trigger frame protection, to ensure that the trigger frame processing time of the STA that supports trigger frame protection and the trigger frame processing time of the STA that does not support trigger frame protection are greater than or equal to a minimum trigger frame processing time, to obtain a sufficient trigger frame processing time.

Optionally, for the PN, an existing standard PN may be reused, or a separate PN, for example, a trigger frame PN (trigger PN, TPN), may be defined for the trigger frame. This is not limited in this application.

Trigger frames are classified into broadcast trigger frames and unicast trigger frames. Optionally, for a broadcast trigger frame, an existing integrity group temporal key (integrity group temporal key, IGTK) or a beacon integrity group temporal key (beacon IGTK, BIGTK) may be reused as a key of the broadcast trigger frame. An IGTK identifier may be 4 or 5, and a BIGTK identifier may be 6 or 7. Optionally, for a broadcast trigger frame, a key of the broadcast trigger frame may alternatively be a separately defined trigger-based integrity group temporal key (trigger IGTK, TIGTK). Optionally, for a unicast trigger frame, an existing pairwise transient key (pairwise transient key, PTK) may be reused as a key of the unicast trigger frame, or a separate trigger temporal key (trigger temporal key, TTK) may be generated. In addition, different keys may be further respectively defined for an uplink trigger frame and a downlink trigger frame. This is not limited in this application.

In a possible implementation, the TTK and the TIGTK may be a control frame temporal key (control frame temporal key, CTK) and a control frame integrity group temporal key (control frame integrity group temporal key, CIGTK).

In a multi-link (multi-link) scenario, an independent CTK and an independent CIGTK need to be defined for each link. The following first describes the multi-link scenario. In the multi-link scenario, there is an AP multi-link device (Multi-link device, MLD) and a STA MLD. A plurality of connections may be established between the AP MLD and the STA MLD. For example, the AP MLD includes three affiliated APs, which are respectively an AP 1, an AP 2, and an AP 3. The STA MLD includes three affiliated STAs, which are respectively a STA 1, a STA 2, and a STA 3. The plurality of connections are respectively a link 1 between the AP 1 and the STA 1, a link 2 between the AP 2 and the STA 2, and a link 3 between the AP 3 and the STA 3. The three links correspond to three frequency bands, which are respectively a 2.4 GHz frequency band, a 5 GHz frequency band, and a 6 GHz frequency band. This multi-link feature can optimize use of spectrum resources through a plurality of links. One CTK is bound to medium access control (medium access control, MAC) addresses at two ends of a corresponding link, and the MAC addresses at the two ends are respectively a MAC address of an affiliated (affiliated) AP of an AP MLD and a MAC address of an affiliated STA of a STA MLD. One CIGTK is bound to a MAC address of a corresponding affiliated AP.

To achieve key agreement on the CIGTK and CTK, corresponding key data encapsulation (key data encapsulation, KDE) needs to be defined.

For example, a format of KDE of the CIGTK is defined as shown in Table 1.

**Table 1**

| | | | |
|---|---|---|---|
| Key ID | Link ID | CIPN | CIGTK |

Key ID indicates a key identifier selected by an authenticator, Link ID indicates a link for which the CIGTK is used, the control frame IGTK packet number (control frame IGTK packet number, CIPN) carries a packet sequence number of the corresponding CIGTK, and CIGTK carries the corresponding CIGTK.

For example, a format of KDE of the CTK is defined as shown in Table 2.

**Table 2**

| | | | | |
|---|---|---|---|---|
| Key ID | Link ID | ANonce | SNonce | Key Info |

Key ID indicates a key identifier selected by an authenticator, Link ID indicates a link for which the CTK is used, ANonce carries a random number of the authenticator, SNonce carries a random number of a supplicant, and Key Info carries information related to a key used to derive the CTK.

In addition, for fast basic service set (basic service set, BSS) transition, corresponding subelements (subelements) of the CIGTK and the CTK need to be defined in a fast basic service set transition element (fast BSS transition element, FTE).

For example, a format of a subelement of the CIGTK is defined as shown in Table 3.

**Table 3**

| | | | | | | |
|---|---|---|---|---|---|---|
| Subelement ID | Length | Key ID | Link ID | CIPN | Key Length | CIGTK |

Subelement ID indicates a subelement identifier, Length indicates a length of the subelement of the CIGTK, Key ID indicates a key identifier selected by an authenticator, Link ID indicates a link for which the CIGTK is used, CIPN carries a packet sequence number of the corresponding CIGTK, Key Length indicates a key length, namely, a length of the CIGTK, in bytes, and CIGTK carries the corresponding CIGTK.

For example, a format of a subelement of the CTK is defined as shown in Table 4.

**Table 4**

| | | | | | | |
|---|---|---|---|---|---|---|
| Subelement ID | Length | Key ID | Link ID | ANonce | SNonce | Key Info |

Subelement ID is a subelement identifier, Length indicates a length of the subelement of the CTK, Key ID indicates a key identifier selected by an authenticator, Link ID indicates a link for which the CTK is used, ANonce carries a random number of the authenticator, SNonce carries a random number of a supplicant, and Key Info carries information related to a key used to derive the CTK.

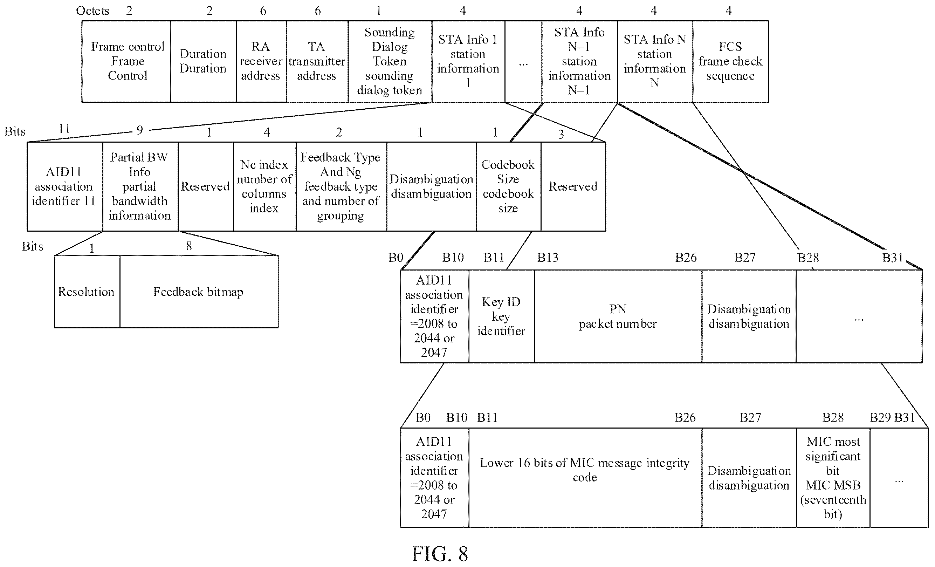

The following uses an example in which the control frame as a null data packet announcement (null data packet announcement, NDPA) frame to describe how to carry the protection information #1 in the NDPA frame. As shown in FIG. 8, an NDPA frame uses a frame structure similar to that of a trigger frame. The frame includes a sounding dialog token field (corresponding to the common information field in the trigger frame) and a plurality of station information fields (corresponding to the user information fields in the trigger frame). For meanings of fields in a station information field 1, refer to descriptions in the protocol. Details are not described herein again. It can be learned that each station information field also includes an AID12 field. Therefore, the NDPA frame may also be protected by using the foregoing method. FIG. 8 shows an example of a possible method for carrying NDPA frame protection information in an NDPA frame. As shown in FIG. 8, the NDPA frame includes a station information field N-1 and a station information field N (corresponding to the first user information field in the trigger frame). First information carried in the station information field N-1 includes a key identifier and a PN, and first information carried in the station information field N includes MIC.

It should be noted that an AID11 field in the NDPA frame is 11 bits (B0 to B10). Therefore, a maximum value of the AID11 field in the station information field for carrying the NDPA frame protection information is 2047.

It should be further noted that, in the station information field that carries the protection information #1, B27 needs to be set to 1, to prevent a conventional 802.11ac STA from mistakenly considering a 2^{nd} 2 bytes in 4 bytes including two 2 bytes as a station information field of the conventional 802.11ac STA. Therefore, if the carried MIC shown in FIG. 8 is greater than 16 bits, for example, the MIC is 17 bits, B11 to B26 of a station information field #N may carry any 16 bits of the MIC, and a bit is additionally selected from B28 to B31 to carry the remaining 1 bit (for example, a most significant bit). For example, in FIG. 8, B11 to B26 of a station information field M carry first to sixteenth bits of the MIC, B28 carries a seventeenth bit of the MIC (that is, the most significant bit of the MIC).

S320: The first device sends the PPDU to the second device. Correspondingly, the second device receives the PPDU from the first device.

S330: The second device parses the PPDU.

After receiving the PPDU, the second device determines, based on an association identifier in a user information field in the PPDU, that the user information field carries the first user information field. Then, the second device determines the protection information #1 based on the first information carried in the first user information field, and determines, based on the protection information #1, whether the control frame is attacked. If the control frame is attacked, the second device ignores the control frame. Otherwise, the second device proceeds with a subsequent processing procedure based on the received control frame.

Optionally, FIG. 6 is used as an example, the second device reads second information in B56 in the common information field of the trigger frame of the PPDU, and the second information indicates that the trigger frame carries the first information. After reading the second information, the second device may make corresponding preparations in advance to read the protection information (namely, the first information) carried in the first user information field.

Optionally, FIG. 6 is used as an example, the second device reads third information in B57 to B62 in the common information field of the trigger frame of the PPDU, and the third information indicates a location of at least one first user information field included in the trigger frame. After reading the third information, the second device can quickly locate the location of the first user information field.

It should be understood that the second device is aware of which types of information are carried by the first device at which locations in the control frame and how the information is carried (for example, carried through replacement or XORing in the FCS field). In this way, the second device can read the corresponding information at the corresponding location in the control frame.

Optionally, an example in which the protection information #1 includes the PN and the MIC is used to describe how the second device determines whether a forgery attack and a replay attack on the control frame is prevented. Because the key is obtained in the authentication process between the first device and the second device, an attacker cannot obtain the key, and therefore cannot forge the MIC that can be aware of by the transmit end and the receive end. Therefore, the second device may calculate the MIC locally. It should be understood that the second device determines that a key and information that needs to be encrypted that are used in the local MIC is the same as those used by the MIC determined by the first device as carried in the control frame. In other words, the second device is aware of which information in the control frame of the received PPDU is information for determining the local MIC. Then, the second device compares the MIC in the protected information #1 with the MIC locally calculated by the second device. If the MIC in the protected information #1 matches the MIC locally calculated by the second device, it is considered that no forgery attack occurs. Otherwise, it is considered that a forgery attack occurs. In addition, the second device identifies the PN sent by the transmit end. If each received PN monotonically increases compared with a previously received PN, it is considered as normal. Otherwise, it is considered that a replay attack occurs. It should be noted that the attacker cannot forge a PN, and can merely copy a previously received PN to perform a replay attack. A forged PN causes a MIC mismatch.

In the technical solution, the first user information field in the control frame carries the control frame protection information, to prevent the control frame from being attacked. According to this control frame protection mechanism, a receiver device that supports control frame protection may determine, based on the association identifier in the first user information field, that the first user information field carries the control frame protection information, and a receiver device that does not support control frame protection considers the first user information field as a user information field that is not sent to the receiver device but sent to another device. Therefore, receiving of the control frame by the device that does not support control frame protection is not affected.

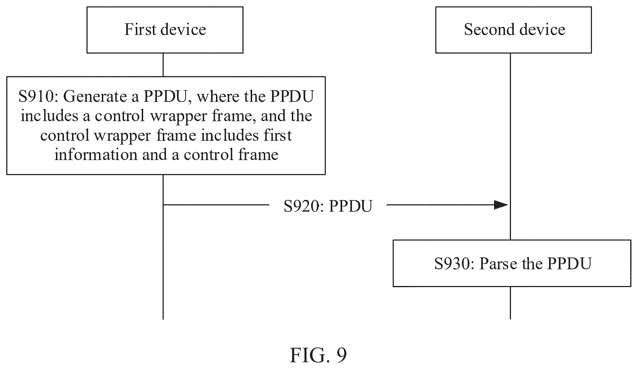

The following provides another control frame protection mechanism with reference to FIG. 9. The protection mechanism can also effectively prevent attacks on control frames.

FIG. 9 is a diagram of another physical layer protocol data unit sending and receiving method according to an embodiment of this application. The method includes the following steps. For example, in the method, a first device is an AP, and a second device is a STA.

S910: The first device generates a PPDU, where the PPDU includes a control wrapper (wrapper) frame, the control wrapper frame includes first information and a control frame, and the first information includes information for protecting the control frame.

The first information provided in this embodiment of this application is not specifically limited. Any information that can be used to protect the control frame falls within the protection scope of the first information provided in this embodiment of this application.

For example, the first information may include at least one of a key identifier, a PN, and MIC. In this embodiment of this application, a field carrying the key identifier may be referred to as a key identifier field, a field carrying the PN may be referred to as a PN field, and a field carrying the MIC may be referred to as an MIC field.

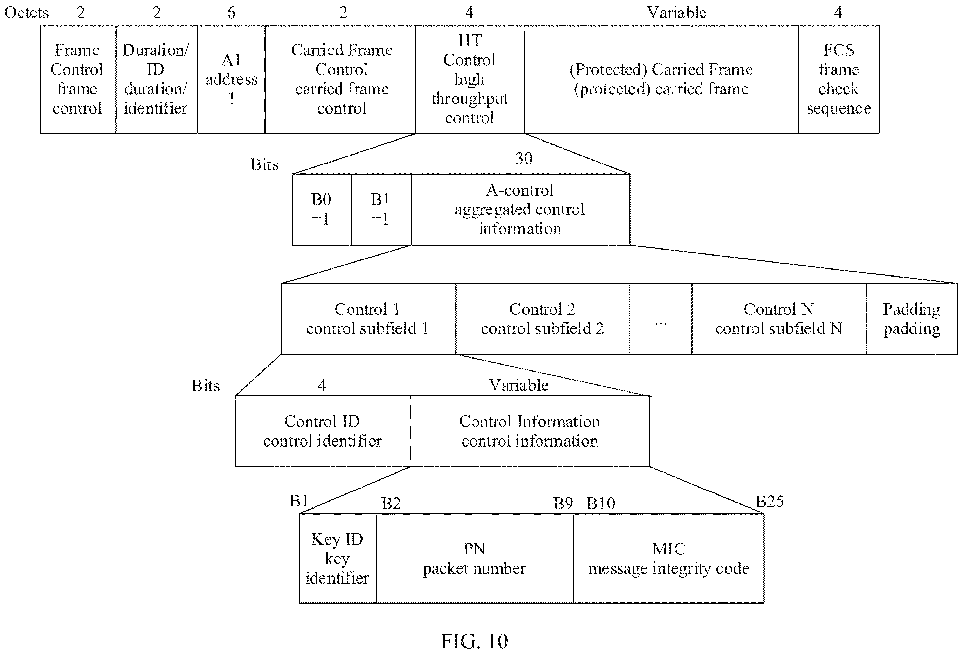

Because an initial control frame does not carry a high throughput control field, the control wrapper frame is introduced to help the control frame implement some functions by using the high throughput control field. FIG. 10 is a diagram of a frame structure of a control wrapper frame in an existing standard. The control wrapper frame includes a high throughput control field and a carried frame field. The following provides specific implementations of carrying first information and a control frame in the control wrapper frame.

In a possible implementation, the high throughput control field in the control wrapper frame may be used to help the control frame additionally carry the first information. In other words, the first information may be carried in the high throughput control field. For example, the first information may be carried in a control subfield in an aggregated (aggregated) control information (A-control) field in the high throughput control field. As shown in FIG. 10, the aggregated control information field includes N control subfields, where N is a positive integer. The first information may be carried in a control information field in a control subfield #1. The control subfield #1 includes a control identifier field and the control information field. Specifically, a value of the control identifier field may be set to one value in 10 to 14, indicating that the control information field in the control subfield carries the first information. In addition, the carried frame field carries the control frame.

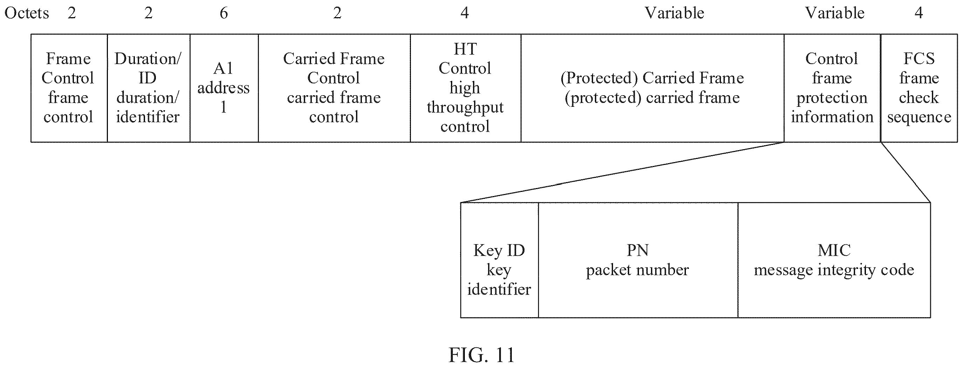

In another possible implementation, a new field may be additionally introduced based on the existing control wrapper frame, and the new field carries the first information. For example, as shown in FIG. 11, a new field is introduced based on the existing control wrapper frame. The new field is a newly added control frame protection information field in the figure. The new field carries the first information. In addition, the carried frame field carries the control frame.

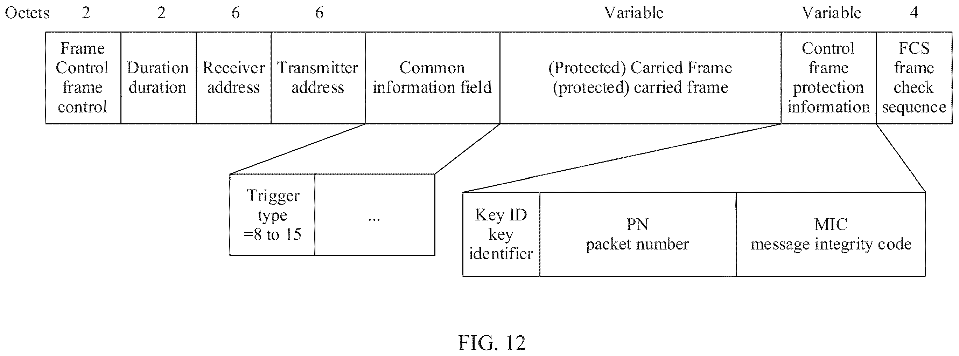

It may be understood that the control wrapper frame in FIG. 11 may be considered as a new control wrapper frame. There are many ways to design a format of a new type of control wrapper frame. One way is to define a new frame type and subtype. However, there are not many existing frame types and subtypes, especially those of control frames. Therefore, this application provides a method for designing a new control wrapper frame by using an existing trigger frame. As shown in FIG. 12, a trigger type field in a common information field of the trigger frame carries a first value, the first value indicates that the control wrapper frame includes a control frame protection information field and a carried frame field, the first value is any value in 8 to 15, and the control frame is carried in the carried frame field. It can be learned that a value of the trigger type field in the common information field of the trigger frame may be specified as the first value, to redefine a frame format in the trigger frame. An advantage of this manner is that unused frame types and subtypes are saved.

S920: The first device sends the PPDU to the second device. Correspondingly, the second device receives the PPDU from the first device.

S930: The second device parses the PPDU.

After receiving the PPDU, the second device determines, based on the first information carried in the control wrapper frame of the PPDU, whether the control frame is attacked. If the control frame is attacked, the second device ignores the control frame. Otherwise, the second device proceeds with a subsequent processing procedure based on the received control frame. For a specific determining process, refer to the descriptions in S330. Details are not described herein again.

In the technical solution, the existing or newly defined control wrapper (Wrapper) frame is used to carry the control frame protection information, to prevent the control frame from being attacked. This control frame protection mechanism is applicable to any control frame. Because the protection mechanism does not need to modify or redefine the control frame, the protection mechanism is particularly applicable to a control frame of a fixed frame structure, for example, a block acknowledge request (block acknowledge request, BAR) frame or a beamforming report poll (beamforming report poll, BFRP) frame.

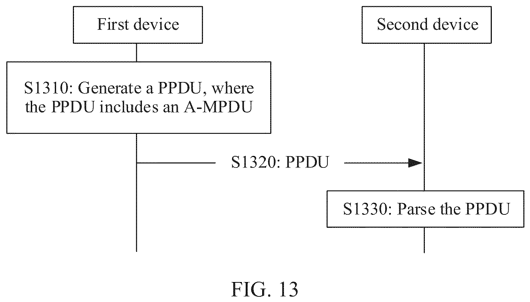

The following provides still another control frame protection mechanism with reference to FIG. 13. The protection mechanism can also effectively prevent attacks on control frames.

FIG. 13 is a diagram of still another physical layer protocol data unit sending and receiving method according to an embodiment of this application. The method includes the following steps. For example, in the method, a first device is an AP, and a second device is a STA.

S1310: The first device generates a PPDU.

The PPDU includes an aggregated medium access control protocol data unit (aggregated medium access control protocol data unit, A-MPDU), and the A-MPDU includes a first medium access control protocol data unit (medium access control protocol data unit, MPDU) and a second MPDU. The first MPDU carries a control frame, the second MPDU carries first information, and the first information includes information for protecting the control frame.

The first information provided in this embodiment of this application is not specifically limited. Any information that can be used to protect the control frame falls within the protection scope of the first information provided in this embodiment of this application.

It should be understood that the A-MPDU may further include more MPDUs in addition to the first MPDU and the second MPDU. This is not limited in this application.

For example, the first information may include at least one of a key identifier, a PN, and MIC. In this embodiment of this application, a field carrying the key identifier may be referred to as a key identifier field, a field carrying the PN may be referred to as a PN field, and a field carrying the MIC may be referred to as an MIC field.

For example, the PPDU in this embodiment is any one of an HT PPDU, a VHT PPDU, an HE PPDU, an EHT PPDU, and a UHR PPDU.

For example, the second MPDU may carry the first information by using one management frame, for example, using an action frame or an action frame without acknowledgment to carry the first information in an information element manner. A specific implementation is not limited in this application.

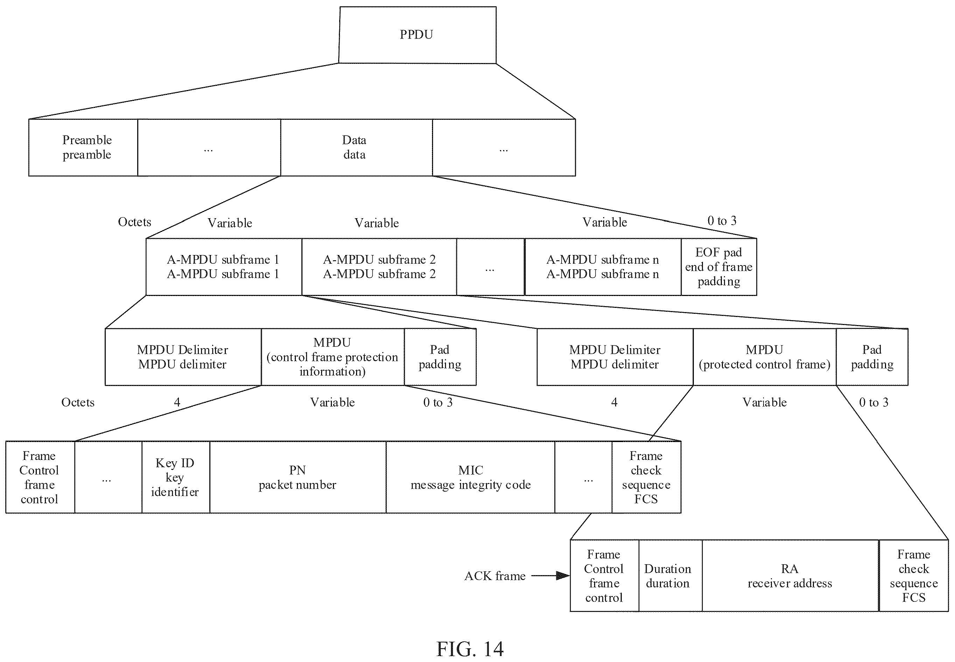

FIG. 14 is a diagram of a possible case in which an A-MPDU carries first information according to this application. A data field of a PPDU includes the A-MPDU, the A-MPDU includes n A-MPDU subframe fields, and each A-MPDU subframe field includes an MPDU delimiter field, an MPDU field, and a padding field. An MPDU field in a 1^{st} A-MPDU subframe field carries the first information, the first information includes a key identifier, a PN, and MIC, and an MPDU field in a 2^{nd} A-MPDU subframe field carries an acknowledgement (acknowledgement, ACK) frame (which is an example of a control frame).

S1320: The first device sends the PPDU to the second device. Correspondingly, the second device receives the PPDU from the first device.

S1330: The second device parses the PPDU.

After receiving the PPDU, the second device determines, based on the first information carried in a second MPDU of the A-MPDU of the PPDU, whether the control frame carried in a first MPDU is attacked. If the control frame is attacked, the second device ignores the control frame. Otherwise, the second device proceeds with a subsequent processing procedure based on the received control frame. For a specific determining process, refer to the descriptions in S330. Details are not described herein again.

In the technical solution, an A-MPDU in which a plurality of MPDUs are aggregated is used, one MPDU (frame) of the A-MPDU carries the control frame, and another MPDU of the A-MPDU carries the first information. In other words, the control frame is protected across frames by using the A-MPDU. This control frame protection mechanism is applicable to any control frame. Because this protection mechanism does not need to modify or redefine the control frame, the protection mechanism is particularly applicable to a control frame whose frame format cannot be changed.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by the devices (for example, the first device and the second device) may alternatively be implemented by a component (for example, a chip or a circuit) of the device.

The methods provided in embodiments of this application are described above in detail with reference to FIG. 1 to FIG. 14. The methods are mainly described from a perspective of interaction between the first device and the second device. It may be understood that to implement the foregoing functions, the first device and the second device include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

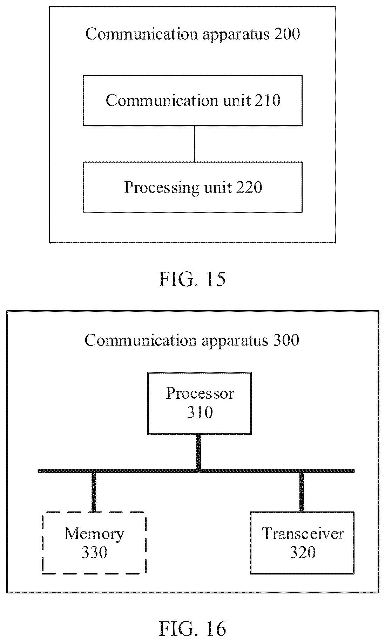

The following describes in detail communication apparatuses provided in the embodiments of this application with reference to FIG. 15 and FIG. 16. It should be understood that descriptions of apparatus embodiments correspond to the descriptions of the method embodiments. Therefore, for content that is not described in detail, refer to the foregoing method embodiments. For brevity, details of a part of content are not described herein again. In embodiments of this application, the first device or the second device may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the communication method provided in this application. The following describes a communication apparatus provided in this application. In a possible implementation, the apparatus is configured to implement steps or procedures corresponding to the first device in the foregoing method embodiments. In another possible implementation, the apparatus is configured to implement the steps or procedures corresponding to the second device in the foregoing method embodiments.

FIG. 15 is a block diagram of a communication apparatus 200 according to an embodiment of this application. As shown in FIG. 15, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the first device in the foregoing method embodiments. The processing unit 220 is configured to perform processing-related operations of the first device in the foregoing method embodiments, and the communication unit 210 is configured to perform sending-related operations of the first device in the foregoing method embodiments.

In another possible design, the apparatus 200 may implement steps or procedures performed by the second device in the foregoing method embodiments. The communication unit 210 is configured to perform receiving-related operations of the second device in the foregoing method embodiments, and the processing unit 220 is configured to perform processing-related operations of the second device in the foregoing method embodiments.

It should be understood that the apparatus 200 herein is embodied in a form of functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the first device in the foregoing embodiments, and may be configured to perform the procedures and/or the steps corresponding to the first device in the foregoing method embodiments; or the apparatus 200 may be specifically the second device in the foregoing embodiments, and may be configured to perform the procedures and/or the steps corresponding to the second device in the foregoing method embodiments. To avoid repetition, details are not described herein again.

The apparatus 200 in the foregoing solutions has a function of implementing corresponding steps performed by the first device in the foregoing methods, or the apparatus 200 in the foregoing solutions has a function of implementing corresponding steps performed by the second device in the foregoing methods. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 15 may be the first device or the second device in the foregoing embodiments, or may be a chip or a chip system, for example, a system on chip (system on chip, SoC). The communication unit may be an input/output circuit or a communication interface. The processing unit is a processor, a microprocessor, or an integrated circuit integrated on the chip. This is not limited herein.

FIG. 16 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the first device in the foregoing method embodiments. In another possible implementation, the apparatus 300 is configured to implement procedures and steps corresponding to the second device in the foregoing method embodiments.

It should be understood that the apparatus 300 may be specifically the first device or the second device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the first device or the second device in the foregoing method embodiments. Optionally, the memory 330 may include a read-only memory and a random access memory, and provide instructions and data for the processor. A part of the memory may further include a nonvolatile random access memory. For example, the memory may further store information of a device type. The processor 310 may be configured to execute the instructions stored in the memory, and when the processor 310 executes the instructions stored in the memory, the processor 310 is configured to perform the steps and/or procedures corresponding to the first device or the second device in the method embodiments.

In an implementation process, steps in the foregoing methods can be implemented by using a hardware integrated logical circuit in the processor, or by using instructions in a form of software. The steps of the method disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these memories and any memory of another appropriate type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor. It should be further noted that the memory described herein is intended to include, but not limited to, these memories and any memory of another appropriate type.

In addition, this application further provides a computer-readable storage medium. The computer-readable storage medium stores computer instructions, and when the computer instructions are run on a computer, the operations and/or the procedures performed by the first device or the second device in the method embodiments of this application are performed.

This application further provides a computer program product. The computer program product includes computer program code or instructions, and when the computer program code or the instructions are run on a computer, the operations and/or the procedures performed by the first device or the second device in the method embodiments of this application are performed.

In addition, this application further provides a communication system. The communication system includes the first device or the second device in embodiments of this application.

It should be further noted that the memory described herein is intended to include, but not limited to, these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments. In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or a part of the technical solutions may be implemented in a form of a software product. The computer software product is stored in a storage medium, and includes several instructions for instructing a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A physical layer protocol data unit sending method, comprising:
generating a physical layer protocol data unit PPDU, wherein the PPDU comprises a control frame, the control frame comprises N first user information fields, an association identifier in the first user information field indicates that the first user information field carries first information, the first information comprises information for protecting the control frame, and N is an integer greater than or equal to 1; and
sending the PPDU.

2. The method according to claim 1, wherein the first information comprises at least one of a key identifier, a packet number PN, or message integrity code MIC.

3. The method according to claim 1 or 2, wherein any one of N association identifiers in the N first user information fields is a predefined value.

4. The method according to any one of claims 1 to 3, wherein a common field in the control frame carries second information, and the second information indicates that the control frame carries the first information.

5. The method according to any one of claims 1 to 4, wherein a common field in the control frame carries third information, and the third information indicates a location of at least one first user information field in the N first user information fields.

6. The method according to any one of claims 1 to 5, wherein at least one of a common field or a frame check sequence FCS field in the control frame carries fourth information, and the fourth information comprises information for protecting the control frame.

7. The method according to any one of claims 1 to 6, wherein
the frame check sequence FCS field in the control frame carries a first exclusive OR result at a first location, the first exclusive OR result is an exclusive OR result of corresponding cyclic redundancy code CRC at the first location of the FCS field and fifth information, the fifth information comprises information for protecting the control frame, and a number of bits of a bit value corresponding to the CRC at the first location of the FCS field is the same as a number of bits of a bit value corresponding to the fifth information.

8. The method according to any one of claims 1 to 7, wherein duration from an end of a last first user information field in the N first user information fields to an end of the control frame is greater than or equal to a minimum trigger frame processing time of a first-type device, and the first-type device is a device capable of interpreting the association identifier in the first user information field.

9. A physical layer protocol data unit receiving method, comprising:
receiving a physical layer protocol data unit PPDU, wherein the PPDU comprises a control frame, the control frame comprises N first user information fields, an association identifier in the first user information field indicates that the first user information field carries first information, the first information comprises information for protecting the control frame, and N is an integer greater than or equal to 1; and
parsing the PPDU.

10. The method according to claim 9, wherein the first information comprises at least one of a key identifier, a packet number PN, or message integrity code MIC.

11. The method according to claim 10, wherein the control frame carries the MIC, and the method further comprises:
determining local MIC; and
when it is determined that the local MIC matches the MIC carried in the control frame, considering that the control frame is not forged.

12. The method according to claim 10 or 11, wherein the control frame carries the PN, and the method further comprises:
when it is determined that the PN carried in the control frame is greater than a previously received PN, considering that no replay attack occurs in the control frame.

13. The method according to any one of claims 9 to 12, wherein any one of N association identifiers in the N first user information fields is a predefined value.

14. The method according to any one of claims 9 to 13, wherein a common field in the control frame carries second information, and the second information indicates that the control frame carries the first information.

15. The method according to any one of claims 9 to 14, wherein a common field in the control frame carries third information, and the third information indicates a location of at least one first user information field in the N first user information fields.

16. The method according to any one of claims 9 to 15, wherein at least one of a common field or a frame check sequence FCS field in the control frame carries fourth information, and the fourth information comprises information for protecting the control frame.

17. The method according to any one of claims 9 to 16, wherein
the frame check sequence FCS field in the control frame carries a first exclusive OR result at a first location, the first exclusive OR result is an exclusive OR result of corresponding cyclic redundancy code CRC at the first location of the FCS field and fifth information, the fifth information comprises information for protecting the control frame, and a number of bits of a bit value corresponding to the CRC at the first location of the FCS field is the same as a number of bits of a bit value corresponding to the fifth information.

18. The method according to any one of claims 9 to 17, wherein duration from an end of a last first user information field in the N first user information fields to an end of the control frame is greater than or equal to a minimum trigger frame processing time of a first-type device, and the first-type device is a device capable of interpreting the association identifier in the first user information field.

19. A communication apparatus, wherein the communication apparatus comprises a module configured to perform the method according to any one of claims 1 to 8, or the communication apparatus comprises a module configured to perform the method according to any one of claims 9 to 18.

20. A communication apparatus, comprising a processor, wherein the processor is coupled to a memory, and configured to execute instructions in the memory, to implement the method according to any one of claims 1 to 8, or implement the method according to any one of claims 9 to 18.

21. A computer-readable storage medium, wherein the computer-readable storage medium stores computer instructions, and when the computer instructions are executed by an apparatus, the apparatus is enabled to implement the method according to any one of claims 1 to 8, or the apparatus is enabled to implement the method according to any one of claims 9 to 18.
